# EUROPEAN PATENT APPLICATION

(11) **EP 4 656 804 A1**
(43) Date of publication of application: **03.12.2025**
(21) Application number: 23900107.6
(22) Date of filing: 14.12.2023
(51) Int. Cl.: E02D 13/08, E02D 9/02, E02B 17/00

(54) **CLOG-FIGHTING LEG JETTING SYSTEM FOR OFFSHORE SELF-ELEVATING PLATFORM**

(30) Priority: 16.06.2023 CN 202310719396
(71) Applicant: China Nuclear Power Engineering Co., Ltd., Shenzhen, Guangdong 518124 (CN)
(72) Inventor: LI, Songhai, Shenzhen, Guangdong 518124 (CN); SU, Lei, Shenzhen, Guangdong 518124 (CN); FENG, Chunping, Shenzhen, Guangdong 518124 (CN); LIU, Yiliang, Shenzhen, Guangdong 518124 (CN); WEI, Peng, Shenzhen, Guangdong 518124 (CN); LIU, Shibao, Shenzhen, Guangdong 518124 (CN); JIA, Zhenyong, Shenzhen, Guangdong 518124 (CN); ZHU, Zhipeng, Shenzhen, Guangdong 518124 (CN); WEI, Hongmin, Shenzhen, Guangdong 518124 (CN); HOU, Xiaokun, Shenzhen, Guangdong 518124 (CN)
(74) Representative: Westphal, Mussgnug & Partner, Patentanwälte mbB
(86) International application number: PCT/CN2023/138954
(87) International publication number: WO 2024/120539

(57) **Abstract**

Disclosed is a clog-fighting leg jetting system for an offshore self-elevating platform, which comprises spud cans; spud can upper surface systems and spud can lower surface systems separately arranged on upper and lower sides of the spud cans; a supply system; and spud can main pipes connected to the supply system; each spud can upper surface system comprises first connection pipeline, a spud can main pipe splits into a plurality of first connection pipelines at the spud can upper surface; each first connection pipeline is connected to a plurality of first leg jetting branch pipes; an outlet end of each first leg jetting branch pipe is connected to a first leg jetting valve; each spud can lower surface system comprises second connection pipeline, a spud can main pipe splits into a plurality of second connection pipelines at the lower surface of the spud can; each second connection pipeline is connected to a plurality of second leg jetting branch pipes; and an outlet end of each second leg jetting branch pipe is connected to a second leg jetting valve. The present clog-fighting leg jetting system for an offshore self-elevating platform can prevent serious clogging of the leg jetting system, improve work efficiency, reduce the risk of strain on the legs during pull-out, and ensure the safety of the rig.

## Description

### FIELD

The invention relates to the field of jetting for the offshore self-elevating platform of nuclear power plants, particularly to a anti-clogging jetting system for an offshore self-elevating platform.

### BACKGROUND

Self-elevating platforms in the marine industry, such as fan installation platforms and oil drilling platforms, often have 3-6 liftable legs, the legs are penetrated into the seabed during elevated operating condition; the legs need to be pulled out when the platform moves. At this time, there are suction forces between the spudcan and the seabed, which makes it difficult to pull out the legs. For this reason, a jetting system is set on the legs, and high-pressure water or air is injected when the legs need to be pulled out, which destroys the vacuum and reduces the pull-out force. According to the experience of the fan installation platform, the pull-out time is only about 4 hours when the jetting system is available, and the pull-out time can reach more than 24 hours when the jetting system is unavailable. Pulling out legs for a long time will cause fatigue damage to the legs, reduce their service life, and bring potential safety hazards. Ensuring the availability of a jetting system can improve the operation efficiency, prolong the life of legs, and improve the safety of the platform.

The owners of the oil drilling platform and fan installation platform have realized the importance of the jetting system and studied and improved the jetting system to achieve a good effect of jetting and drag reduction, reduce pull-out force, and improve operation efficiency and safety. In the prior art, the working environment of the jetting valve is seabed, which is complex and harsh, and the existing technical scheme is not ideal.

Because the jetting system works in the complex geological environment on the seabed, the mud or clay on the seabed will enter the jetting system, and after a period of time, the mud or clay will solidify, and the jetting system will be seriously blocked, which will make it not available. Take the jetting system at the bottom of the spudcan as an example. In the existing platform jetting system, the jetting main pipe passes through the spudcan upper surface to form a ring pipe, and then the ring pipe branches to each nozzle. The nozzle forms are as follows: the bottom of the spudcan is welded with a cylindrical plate, a hole is opened on the plate, and high-pressure water is sprayed from the hole.

Defects of the prior art:
1. The nozzle is open state, and mud will inevitably enter the pipeline of the jetting system when the platform presses the legs downwards;
2. The jetting main pipe is close to the nozzle, and there are no mud prevention and isolation measures. Mud or clay can easily enter the jetting ring pipe, which leads to the clog of the main pipe of the jetting system and makes the jetting system unavailable.

### SUMMARY

The technical problem to be solved by the invention is to provide a anti-clogging jetting system for an offshore self-elevating platform.

The technical scheme adopted by the invention for solving the technical problems is as follows: constructing a anti-clogging jetting system for an offshore self-elevating platform, including a spudcan, a spudcan upper surface system and a spudcan lower surface system separately arranged on upper and lower sides of the spudcans, a supply system, and a spudcan main pipe connected to the supply system;
The spudcan upper surface system includes first connection pipelines, the spudcan main pipe splits into a plurality of first connection pipelines at the spudcan upper surface, each of the first connection pipelines is connected to a plurality of first jetting branch pipes, an outlet end of each of the first jetting branch pipes is connected to first jetting valve;
The spudcan lower surface system includes second connection pipelines, the spudcan main pipe splits into a plurality of second connection pipelines at the lower surface of the spudcan, and each of the second connection pipelines is connected to a plurality of second jetting branch pipes, an outlet end of each of the second jetting branch pipes is connected to second jetting valve.

In some embodiments, each of the first jetting branch pipes is provided with a first maintenance valve and a first maintenance port, and the first maintenance port is located downstream of the first maintenance valve;
Each of the second jetting branch pipes is provided with a second maintenance valve and a second maintenance port, and the second maintenance port is located downstream of the second maintenance valve.

In some embodiments, each of the first jetting branch pipes and each of the second jetting branch pipes are straight-through pipes.

In some embodiments, the first jetting valve inlcudes a first jetting valve body, a first valve core arranged in the first jetting valve body, and a first spring;
The first jetting valve body is provided with through hole corresponding to the outlet end of the first jetting branch pipe, and the first jetting valve body is internally provided with a first receiving groove located at the lower side of the through hole and a second receiving groove in communication with the first receiving groove;
One end of the first spring is fixedly connected with the first valve core, and the other end of the first spring is fixedly connected with the bottom wall of the second receiving groove, and the first spring is used for driving the first valve core to be plugged and matched with the through hole.

In some embodiments, the cross-sectional shape of the lower part of the first valve core matches the cross-sectional shape of the second receiving groove so that the lower part of the first valve core and the second receiving groove form a mechanical seal;

The upper part of the first valve core has a conical structure, the through hole is arranged in a shape matching the conical structure, and the through hole is also provided with a first sealing element.

In some embodiments, a plurality of first nozzles are arranged on the side wall of the second receiving groove.

In some embodiments, the second jetting valve inlcudes a second jetting valve body, a valve stem arranged in the second jetting valve body, a second valve core connected with the valve stem, and a second spring;
A first accommodating groove for installing the second spring and a second accommodating groove communicating with the first accommodating groove are arranged in the second jetting valve body, and the first accommodating groove is provided with a fixing plate movably connected with the first accommodating groove, one end of the second spring is fixedly connected with the valve stem, the other end of the second spring is fixedly connected with the fixing plate, and the fixing plate is also provided with a locking piece for locking the valve stem.

In some embodiments, the first accommodating groove is provided with a pressure-inducing hole, and the first accommodating groove is connected with a pressure-inducing pipe through the pressure-inducing hole, one end of the pressure-inducing pipe far away from the pressure-inducing hole is connected with the outlet end of the second jetting branch pipe, and the pressure introduced by the pressure-inducing pipe is used to push the valve stem and the second valve core to move.

In some embodiments, the side wall of the second accommodating groove is provided with a valve body flushing port, the valve body flushing port is connected with a flushing pipeline, and the second valve core is provided with a plurality of second nozzles connected with the flushing pipelines.

In some embodiments, a valve cover is arranged on the side of the second accommodating groove facing away from the first accommodating groove, and the valve cover is provided with a limiting part through which the second valve core passes.

In some embodiments, the second valve core is also further provided with a sealing seat which is arranged in a conical shape, the periphery of the sealing seat is provided with a second sealing element, and a limiting part is provided with a limiting wall matching the shape of the sealing seat.

In some embodiments, the contact between the second valve core and the limiting part is linear contact, and there is a predetermined gap between the second valve core and the limiting part.

In some embodiments, the sealing seat is detachably connected with the second valve core, and the valve cover is detachably connected with the second jetting valve body.

In some embodiments, a guide hole is arranged between the first accommodating groove and the second accommodating groove, and the cross-sectional shape of the valve stem is matched with the cross-sectional shape of the guide hole, to form a mechanical seal between the valve stem and the guide hole.

In some embodiments, the supply system inlcudes an air bottle, a water supplier, a fire extinguisher, air pipeline, and water pipeline, wherein the air bottle is connected to the air inlet end of the air pipeline, the water supplier is connected to the water inlet end of the water pipeline, and the air outlet end of the air pipeline is merged and connected with the water outlet end of the water pipeline 45 and then connected to the inlet end of the spudcan main pipe 5.

The implementation of the invention has the following beneficial effects: the anti-clogging jetting system for an offshore self-elevating platform can prevent the jetting system from being seriously blocked, and make the jetting pipeline easy to dredge so that the jetting system can be kept in an available state for a long time. Keeping the jetting system available for a long time can greatly reduce the pull-out force when pulling legs out on the offshore self-elevating platform, shorten the pull-out time, improve work efficiency, reduce the risk of strain on the legs during pull-out, and ensure the safety of the rig.

### BRIEF DESCRIPTION OF THE DRAWINGS

To explain the technical scheme of the invention more clearly, the invention will be further explained with the accompanying drawings and examples. It should be understood that the following drawings only show some embodiments of the invention, so they should not be regarded as limiting the scope. For ordinary people in the field, other related drawings can be obtained according to these drawings without creative work. In the attached drawings:
FIG. 1 is a pipeline layout diagram of a spudcan upper surface system in some embodiments of the present invention;
FIG. 2 is a pipeline layout diagram of a spudcan lower surface system in some embodiments of the present invention;
FIG. 3 is a schematic structural view of the first jetting valve in some embodiments of the present invention when it is in a shutdown state;
FIG. 4 is a schematic structural view of the first jetting valve in some embodiments of the present invention when it is in a working state;
FIG. 5 is a schematic structural view of a second jetting valve in some embodiments of the present invention;
FIG. 6 is a sectional view taken along the line A-A in FIG. 5;
FIG. 7 is a schematic structural view of the second jetting valve in some embodiments of the present invention when it is in a shutdown state; and
FIG. 8 is a schematic structural view of the second jetting valve in some embodiments of the present invention when it is in a working state.

### DETAILED DESCRIPTION

To have a clearer understanding of the technical features, purposes, and effects of the present invention, specific embodiments of the present invention are described in detail against the accompanying drawings. In the following description, it is to be understood that "front", "back", "upper", "lower", "left", "right", "longitudinal", "transverse", "vertical", "horizontal", "top", "bottom", "inside", "outside", "head", "tail", etc. indicate orientations or positional relationships that are based on the orientations or positional relationships shown in the accompanying drawings, constructed and operated in a particular orientation. They are only intended to facilitate the description of the present technical solution, and is not intended to indicate that the device or element referred to must have a particular orientation, and therefore is not to be construed as a limitation of the present invention.

It should also be noted that unless otherwise specified and limited, terms such as "installation", "connection", "joint", "fixing" and "setting" should be understood broadly, for example, they can be fixed connection, detachable connection or integrated; it can be a mechanical connection or an electrical connection; can be directly connected, can also be indirectly connected through an intermediary, can be the internal connection of two elements or the interaction between two elements. When an element is said to be "above" or "below" another element, the element can be "directly" or "indirectly" above the other element, or there may be one or more intervening elements. The terms "first", "second" and "third" are only for the convenience of describing the technical scheme, and cannot be understood as indicating or implying relative importance or implicitly indicating the number of indicated technical features. Therefore, features defined as "first", "second" and "third" can explicitly or implicitly include one or more such features. For those skilled in the art, the specific meanings of the above terms in the present invention can be understood according to specific situations.

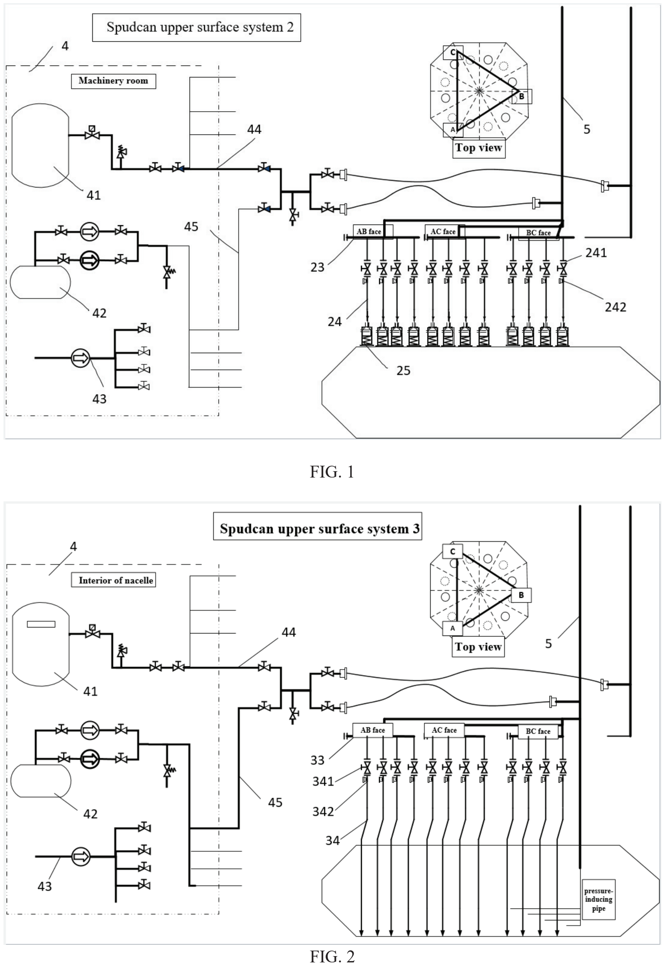

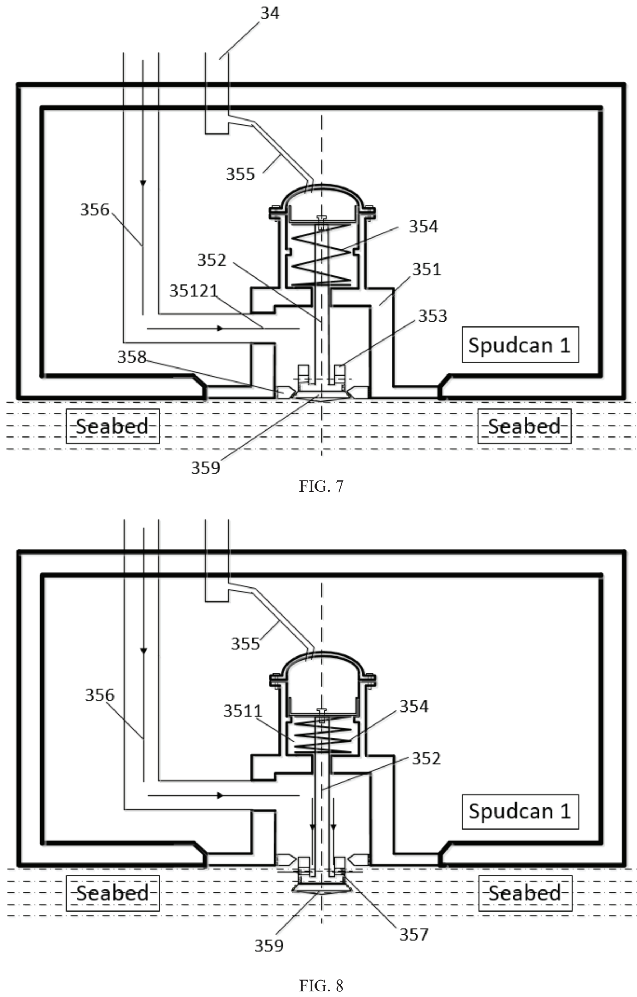

Please refer to FIG. 1 to FIG. 8, which is a anti-clogging jetting system for an offshore self-elevating platform in some embodiments of the present invention. It is used to prevent the jetting system from being seriously blocked under various complex working conditions, and to dredge it quickly when it is blocked, thus ensuring that the jetting system is available for a long time. The anti-clogging jetting system for an offshore self-elevating platform includes a spudcan 1, a spudcan upper surface system 2 and a spudcan lower surface system 3 separately arranged on the upper and lower sides of the spudcan 1, a supply system 4, and a spudcan main pipe 5 connected to the supply system 4. It can be understood that to achieve technical purposes, different jetting valves and jetting pipelines arrangements are designed for the upper and lower surfaces of the spudcan 1.

The spudcan upper surface system 2 includes the first connection pipelines 23, and the spudcan main pipe 5 splits into a plurality of first connection pipelines 23 at the upper surface of the spudcan 1. Each of the first connection pipelines 23 is connected to a plurality of first jetting branch pipes 24, and an outlet end of each of the first jetting branch pipes 24 is connected to a first jetting valve 25. The spudcan lower surface system 3 includes the second connection pipelines 33, and the spudcan main pipe 5 splits into a plurality of second connection pipelines 33 at the lower surface of the spudcan 1. Each of the second connection pipelines 33 is connected to a plurality of second jetting branch pipes 34, and an outlet end of each of the second jetting branch pipes 34 is connected to a second jetting valve 35.

The supply system 4 includes an air bottle 41, a water supplier 42, a fire extinguisher 43, air pipeline 44, and water pipeline 45, the air bottle 41 is connected to the air inlet end of the air pipeline 44, the water supplier 42 is connected to the water inlet end of the water pipeline 45, and the air outlet end of the air pipeline 44 is merged and connected with the water outlet end of the water pipeline 45 and then connected to the inlet end of the spudcan main pipe 5. The air bottle 41 is used to provide air pressure for the anti-clogging jetting system for an offshore self-elevating platform, the water supplier 42 is used to provide water for the anti-clogging jetting system for an offshore self-elevating platform, and the fire extinguisher 43 is used in emergencies.

In this embodiment, as shown in FIGS. 1 and 2, the triangular truss leg of the spudcan 1 is divided into three faces, namely, the AB face, the AC face, and the BC face, and the spudcan main pipe 5 is divided into three first connecting pipes 23 at the upper surface of the triangular truss leg, and each of the first connecting pipes 23 is connected to four first jetting branch pipes 24 respectively. The spudcan main pipe 5 is divided into three second connection pipelines 33 on the lower surface of the triangular truss leg, and each of the second connection pipelines 33 is connected to four second jetting branch pipes 34 respectively. The pipeline arrangement of the spudcan lower surface system 3 is basically the same as the pipeline arrangement of the spudcan upper surface system 2, and will not be described in detail here.

Understandably, the anti-clogging jetting system for an offshore self-elevating platform is equipped with special pipelines for each of the jetting valves, and each of the special pipelines is independently controlled and operated, which makes the jetting system easier to dredge.

To facilitate dredging, each of the first jetting branch pipes 24 and each of the second jetting branch pipes 34 are straight-through pipes so that each of the first jetting branch pipes 24 and each of the second jetting branch pipes 34 to avoid elbows, can directly rush to their corresponding jetting valve to complete dredging.

Further, each of the first jetting branch pipes 24 is provided with a first maintenance valve 241 and a first maintenance port 242, the first maintenance port 242 is located downstream of the first maintenance valve 241, and each of the second jetting branch pipes 34 is provided with a second maintenance valve 341 and a second maintenance port 342, and the second maintenance port 342 is located downstream of the second maintenance valve 341. The first maintenance valves 241 and the second maintenance valves 341 can both be isolation ball valves. Understandably, the functions of the first maintenance ports 242 and the second maintenance ports 342 are as follows: once the jetting system is blocked, the corresponding blocked jetting branch pipe can be washed by a high-pressure cleaning machine, and the outlet hose of the high-pressure cleaning machine is extended into the jetting branch pipe through the maintenance port so that the mud is crushed into slurry and then flows back to the maintenance port to flow out. The functions of the first maintenance valves 241 and the second maintenance valves 341 are as follows: after dredging, other jetting branch pipes can be isolated by the maintenance valves, and the dredged jetting branch pipes can be washed by the high-pressure jetting pump. At the same time, the maintenance valves can also isolate the blocked jetting branch pipes, and prevent mud from entering the spudcan main pipe 5, causing a wider range of clog.

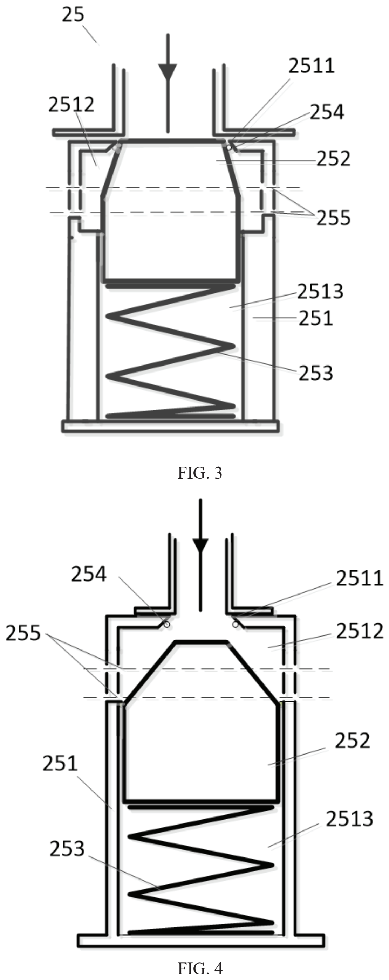

As shown in FIGS. 3 and 4, the first jetting valve 25 includes first jetting valve body 251, a first valve core 252 arranged in the first jetting valve body 251, and a first spring 253, and the first jetting valve body 251 is provided with through hole 2511 corresponding to the outlet end of the first jetting branch pipe 24. The first jetting valve body 251 is internally provided with a first receiving groove 2512 located at the lower side of the through hole 2511 and a second receiving groove 2513 in communicating with the first receiving groove 2512. One end of the first spring 253 is fixedly connected with the first valve core 252, and the other end of the first spring 253 is fixedly connected with the bottom wall of the second receiving groove 2513. The first spring 253 is used for driving the first valve core 252 to be plugged and matched with the through hole 2511.

Among them, the cross-sectional shape of the lower part of the first valve core 252 matches the cross-sectional shape of the second receiving groove 2513 so that the lower part of the first valve core 252 and the second receiving groove 2513 form a mechanical seal. The cross-sectional shape of the lower part of the first valve core 252 and the cross-sectional shape of the second receiving groove 2513 can be square, circular, oval, or polygonal. In this embodiment, the cross-sectional shape of the lower part of the first valve core 252 and the cross-sectional shape of the second receiving groove 2513 are circular.

The upper part of the first valve core 252 is preferably in a conical structure, and the through hole 2511 is arranged in a shape matching the conical structure, and the through hole 2511 is also provided with a first sealing element 254. The upper part of the first valve core 252 is sealed with the conical surface of the through hole 2511 through its conical structure, which can effectively reduce the probability that the first valve core 252 is stuck and does not rebound due to small foreign objects, and prevent muddy water from entering the corresponding first jetting branch pipe 24. At the same time, the first sealing element 254 enhance the sealing performance between the first valve core 252 and the through hole 2511.

In this embodiment, the cross-sectional shape of the first receiving groove 2512 is also circular, the radius of the first receiving groove 2512 is larger than the radius of the second receiving groove 2513, and a plurality of first nozzles 255 are arranged on the side wall of the second receiving groove 2513.

Understandably, the working principle of the first jetting valve 25 is as follows: when the spudcan lower surface system 3 works, the pressure rises, pushing the first valve core 252 to compress the first spring 253, and the side wall of the second receiving groove 2513 is provided with a plurality of openings for installing the first nozzles 255 so that the fluid is ejected through the first nozzles 255 to perform jetting; when the spudcan lower surface system 3 stops, the first spring 253 rebounds, pushing the first valve core 252 and the first jetting valve body 251 to form a seal, and preventing muddy water from entering the corresponding first jetting branch pipe 24. Among them, some mud will inevitably enter the inner cavity of the first jetting valve body 251 during platform leg penetration, but the amount of mud entering is small, so the mud can be directly washed out by the high-pressure jetting water.

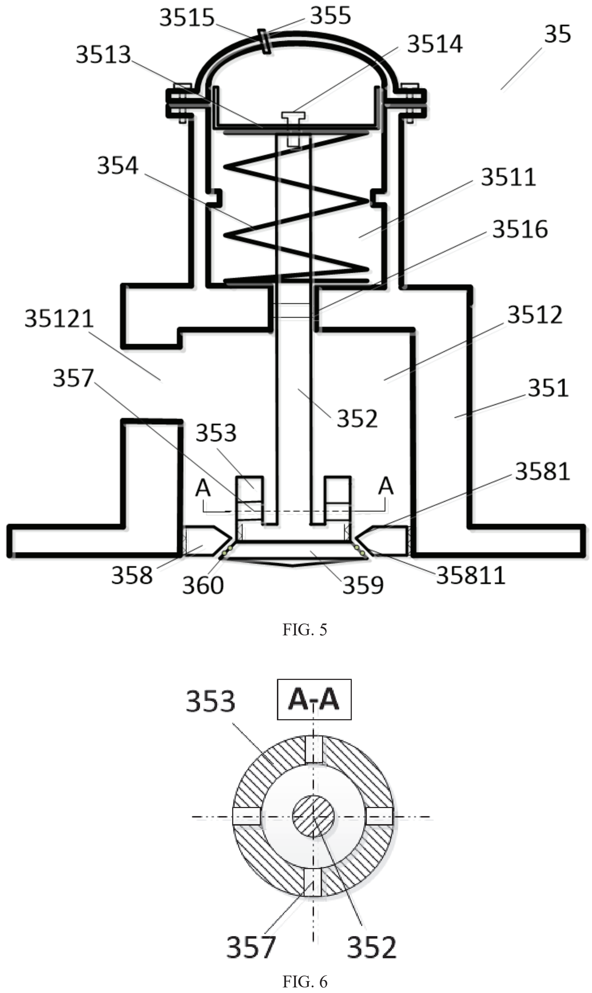

As shown in FIGS. 5 to 8, the second jetting valve 35 includes a second jetting valve body 351, a valve stem 352 arranged in the second jetting valve body 351, a second valve core 353 connected with the valve stem 352, and a second spring 354, and the radius of the second valve core 353 is larger than the radius of the valve stem 352. A first accommodating groove 3511 for installing the second spring 354 and a second accommodating groove 3512 communicating with the first accommodating groove 3511 are arranged in the second jetting valve body 351, the first accommodating groove 3511 is provided with a fixing plate 3513 movably connected with the first accommodating groove 3511, one end of the second spring 354 is fixedly connected with the valve stem 352, and the other end of the second spring 354 is fixedly connected with the fixing plate 3513. The fixing plate 3513 is also provided with a locking piece 3514 for locking the valve stem 352. The fixing plate 3513 can be connected with the first accommodating groove 3511 through a guide rail or other guiding mechanisms, and the fixing plate 3513 can move along the height direction of the first accommodating groove 3511. The locking piece 3514 can be a locking nut.

The first accommodating groove 3511 is provided with a pressure-inducing hole 3515, and the first accommodating groove 3511 is connected with a pressure-inducing pipe 355 through the pressure-inducing hole 3515. The pressure-inducing pipe 355 can be connected with the first accommodating groove 3511 through a quick joint or a welding joint, and one end of the pressure-inducing pipe 355 far away from the pressure-inducing hole 3515 is connected with the outlet end of the second jetting branch pipe 34. The pressure introduced by the pressure-inducing pipe 355 is used to push the valve stem 352 and the second valve core 353 to move. When the spudcan lower surface system 3 is started, the fixing plate 3513 and the second spring 354 jointly push the valve stem 352 and the second valve core 353 to move downward. Among them, the pressure of the pressure-inducing pipe 355 came from the spudcan main pipe 5 is static pressure, which does not cause pressure loss to the system. The spring force of the second spring 354 can be set to a relatively high pressure value according to system pressure, such as 10 bar, which is favorable for overcoming the static pressure of the pipe to rebound quickly and reduce the probability of muddy water returning.

Further, the side wall of the second accommodating groove 3512 is provided with a valve body flushing port 35121, the valve body flushing port 35121 is connected with a flushing pipeline 356, and the second valve core 353 is provided with a plurality of second nozzles 357 connected with the flushing pipelines 356. Understandably, when the second valve core 353 move downward, the second nozzle 357 is exposed out of the spudcan 1 to spray water for jetting.

The valve cover 358 is arranged on the side of the second accommodating groove 3512 facing away from the first accommodating groove 3511, and the valve cover 358 is provided with a limiting part 3581 through which the second valve core 353 pass. The second valve core 353 is further provided with a sealing seat 359 which is arranged in a conical shape. More specifically, the cross-sectional area of the sealing seat 359 gradually increases from top to bottom along its height direction. The periphery of the sealing seat 359 is provided with a second sealing element 360, and a limiting part 3581 is provided with a limiting wall 35811 matching the shape of the sealing seat 359. Understandably, the seal of the second valve core 353 is sealed by the conical sealing seat 359 and the conical surface of the valve cover 358, which can effectively reduce the probability that the second valve core 353 is stuck and do not rebound due to small foreign objects. The smaller foreign objects may be impurities mixed in muddy water, small stones in the water, etc.

Further, the contact between the second valve core 353 and the limiting part 3581 is linear contact, so that the jamming probability is reduced, and there is a predetermined gap between the second valve core 353 and the limiting part 3581, and the positive pressure in the second jetting valve body 351 sprays water outwards through the predetermined gap during work, which can play a self-cleaning role.

A guide hole 3516 is arranged between the first accommodating groove 3511 and the second accommodating groove 3512, and the cross-sectional shape of the valve stem 352 is matched with the cross-sectional shape of the guide hole 3516, to form a mechanical seal between the valve stem 352 and the guide hole 3516. The cross-sectional shape of the valve stem 352 and the cross-sectional shape of the guide hole 3516 are both circular in this embodiment. In other embodiments, the cross-sectional shape of the valve stem 352 and the cross-sectional shape of the guide hole 3516 may both be rectangular, triangular or other shapes, as long as the effect of forming a mechanical seal between the valve stem 352 and the guide hole 3516 is satisfied. The second jetting valve 35 is completely separated from the corresponding second jetting branch pipe 34 by the mechanical seal, thus reducing the failure probability. The sealing seat 359 is detachably connected with the second valve core 353, and the valve cover 358 is detachably connected with the second jetting valve body 351, which can be disassembled underwater and is convenient for maintenance. The sealing seat 359 and the second valve core 353 may be connected together by fasteners or buckles, and the valve cover 358 and the second jetting valve body 351 may also be connected together by fasteners or buckles.

The working principle of the second jetting valve 35 is as follows: when working, the pressure rises after the spudcan lower surface system 3 is started, the second spring 354 pushes the second valve core 353 to move downwards, and the second nozzle 357 on the second valve core 353 is exposed out of the spudcan 1 to spray water for jetting; after the system is shut down, the pressure decreases, and the compressed second spring 354 rebounds, pushing the second valve core 353 upward, and the conical sealing seat 359 forms a seal with the valve cover 358 to prevent the muddy water from flowing back into the jetting valve. Among them, when the second valve core 353 is in the seabed mud environment, a little mud will inevitably enter the second jetting valve body 351. After each pull-out, the platform is in a floating state, and the jetting pump is started to flush the second jetting valve 35. The second jetting valve 35 has a simple flow passage, which is beneficial for flushing mud and other impurities.

The anti-clogging jetting system for an offshore self-elevating platform can prevent the jetting system from being seriously blocked, and make the jetting pipeline easy to dredge so that the jetting system can be kept in an available state for a long time. Keeping the jetting system available for a long time can greatly reduce the pull-out force when pulling legs out on the offshore self-elevating platform, shorten the pull-out time, improve work efficiency, reduce the risk of strain on the legs during pull-out, and ensure the safety of the rig.

It can be understood that the above embodiment only expresses the preferred embodiment of the present invention, and its description is more specific and detailed, but it is not to be understood as a limitation on the scope of the patent of the present invention; it should be pointed out that, for the ordinary technicians in the field, without departing from the premise of the concept of the present invention, they can freely combine the above technical features, and they can make a several deformations and improvements, all of which belong to the scope of protection of the present invention. Therefore, any equivalent transformations and modifications made within the scope of the claims of the present invention shall belong to the scope of the claims of the present invention.

## Claims

1. A anti-clogging jetting system for an offshore self-elevating platform, **characterized by** comprising a spudcan (1), a spudcan upper surface system (2) and a spudcan lower surface system (3) separately arranged on upper and lower sides of the spudcans (1), a supply system (4), and a spudcan main pipe (5) connected to the supply system (4);
the spudcan upper surface system (2) comprises first connection pipeline (23), the spudcan main pipe (5) splits into a plurality of the first connection pipelines (23) at the upper surface of the spudcan (1), each of the first connection pipelines (23) is connected to a plurality of first jetting branch pipes (24), an outlet end of each of the first jetting branch pipes (24) is connected to first jetting valve (25);
the spudcan lower surface system (3) comprises second connection pipeline (33), the spudcan main pipe (5) splits into a plurality of the second connection pipelines (33) at the lower surface of the spudcan (1), each of the second connection pipelines (33) is connected to a plurality of second jetting branch pipes (34), an outlet end of each of the second jetting branch pipes (34) is connected to second jetting valve (35).

2. The anti-clogging jetting system for an offshore self-elevating platform according to claim 1, wherein each of the first jetting branch pipes (24) is provided with a first maintenance valve (241) and a first maintenance port (242), and the first maintenance port (242) is located downstream of the first maintenance valve (241);
each of the second jetting branch pipes (34) is provided with a second maintenance valve (341) and a second maintenance port (342), and the second maintenance port (342) is located downstream of the second maintenance valve (341).

3. The anti-clogging jetting system for an offshore self-elevating platform according to claim 1, wherein each of the first jetting branch pipes (24) and each of the second jetting branch pipes (34) are straight-through pipes.

4. The anti-clogging jetting system for an offshore self-elevating platform according to claim 1, wherein the first jetting valve (25) comprises first jetting valve body (251), a first valve core (252) arranged in the first jetting valve body (251) and a first spring (253);
the first jetting valve body (251) is provided with through hole (2511) corresponding to the outlet end of the first jetting branch pipe (24), and the first jetting valve body (251) is internally provided with a first receiving groove (2512) located at the lower side of the through hole (2511) and a second receiving groove (2513) in communication with the first receiving groove (2512);
one end of the first spring (253) is fixedly connected with the first valve core (252), and the other end of the first spring (253) is fixedly connected with the bottom wall of the second receiving groove (2513), and the first spring (253) is used for driving the first valve core (252) to be plugged and matched with the through hole (2511).

5. The anti-clogging jetting system for an offshore self-elevating platform according to claim 4, wherein the cross-sectional shape of the lower part of the first valve core (252) matches the cross-sectional shape of the second receiving groove (2513) so that the lower part of the first valve core (252) and the second receiving groove (2513) form a mechanical seal;
the upper part of the first valve core (252) has a conical structure, the through hole (2511) is arranged in a shape matching the conical structure, and the through hole (2511) is also provided with a first sealing element (254).

6. The anti-clogging jetting system for an offshore self-elevating platform according to claim 4, wherein a plurality of first nozzles (255) are arranged on the side wall of the second receiving groove (2513).

7. The anti-clogging jetting system for an offshore self-elevating platform according to claim 1, wherein the second jetting valve (35) comprises a second jetting valve body (351), a valve stem (352) arranged in the second jetting valve body (351), a second valve core (353) connected with the valve stem (352), and a second spring (354);
a first accommodating groove (3511) for installing the second spring (354) and a second accommodating groove (3512) communicating with the first accommodating groove (3511) are arranged in the second jetting valve body (351), and the first accommodating groove (3511) is provided with a fixing plate (3513) movably connected with the first accommodating groove (3511), one end of the second spring (354) is fixedly connected with the valve stem (352), the other end of the second spring (354) is fixedly connected with the fixing plate (3513), and the fixing plate (3513) is also provided with a locking piece (3514) for locking the valve stem (352).

8. The anti-clogging jetting system for an offshore self-elevating platform according to claim 7, wherein the first accommodating groove (3511) is provided with a pressure-inducing hole (3515), and the first accommodating groove (3511) is connected with a pressure-inducing pipe (355) through the pressure-inducing hole (3515), one end of the pressure-inducing pipe (355) far away from the pressure-inducing hole (3515) is connected with the outlet end of the second jetting branch pipe (34), and the pressure introduced by the pressure-inducing pipe (355) is used to push the valve stem (352) and a second valve core (353) to move.

9. The anti-clogging jetting system for an offshore self-elevating platform according to claim 7, wherein the side wall of the second accommodating groove (3512) is provided with a valve body flushing port (35121), the valve body flushing port (35121) is connected with a flushing pipeline (356), and the second valve core (353) is provided with a plurality of second nozzles (357) connected with the flushing pipeline (356).

10. The anti-clogging jetting system for an offshore self-elevating platform according to claim 7, wherein a valve cover (358) is arranged on the side of the second accommodating groove (3512) facing away from the first accommodating groove (3511), and the valve cover (358) is provided with a limiting part (3581) through which the second valve core (353) passes.

11. The anti-clogging jetting system for an offshore self-elevating platform according to claim 10, wherein the second valve core (353) is further provided with a sealing seat (359) which is arranged in a conical shape, and the periphery of the sealing seat (359) is provided with a second sealing element (360), and a limiting part (3581) is provided with a limiting wall (35811) matching the shape of the sealing seat (359).

12. The anti-clogging jetting system for an offshore self-elevating platform according to claim 11, wherein the contact between the second valve core (353) and the limiting part (3581) is linear contact, and there is a predetermined gap between the second valve core (353) and the limiting part (3581).

13. The anti-clogging jetting system for an offshore self-elevating platform according to claim 11, wherein the sealing seat (359) is detachably connected with the second valve core (353), and the valve cover (358) is detachably connected with the second jetting valve body (351).

14. The anti-clogging jetting system for an offshore self-elevating platform according to claim 7, wherein a guide hole (3516) is arranged between the first accommodating groove (3511) and the second accommodating groove (3512), and the cross-sectional shape of the valve stem (352) is matched with the cross-sectional shape of the guide hole (3516), to form a mechanical seal between the valve stem (352) and the guide hole (3516).

15. The anti-clogging jetting system for an offshore self-elevating platform according to claim 1, wherein the supply system (4) comprises an air bottle (41), a water supplier (42), a fire extinguisher (43), air pipeline (44), and water pipeline (45), wherein the air bottle (41) is connected to the air inlet end of the air pipeline (44), the water supplier (42) is connected to the water inlet end of the water pipeline (45), and the air outlet end of the air pipeline (44) is merged and connected with the water outlet end of the water pipeline (45) and then connected to the inlet end of the spudcan main pipe (5).
